# EUROPÄISCHE PATENTANMELDUNG

(11) **EP 2 966 483 A1**
(43) Veröffentlichungstag der Anmeldung: **13.01.2016**
(21) Anmeldenummer: 15175454.6
(22) Anmeldetag: 06.07.2015
(51) Int. Cl.: G02B 5/18, B29D 11/00

(54) **VORRICHTUNG UND VERFAHREN ZUR HERSTELLUNG OPTISCHER GITTER UND OPTISCHES GITTER**

(30) Priorität: 11.07.2014 DE 102014109733
(71) Anmelder: Helmholtz-Zentrum Berlin für Materialien und Energie GmbH, 14109 Berlin (DE)
(72) Erfinder: ZESCHKE, Thomas, 10243 Berlin (DE); TRUNZ, Michael, 73631 Aalen (DE)

(57) **Zusammenfassung**

Die Erfindung betrifft eine Vorrichtung zur Herstellung optischer Gitter, auch Gitterteilmaschine genannt. Die Vorrichtung weist mindestens eine Halterung für einen Rohling, ein Stichelwerkzeug mit Halterung, motorisierte Vorschübe für die Halterungen in mindestens zwei Richtungen, Mittel zum steuerbaren Anheben und Absenken des Stichelwerkzeugs und Mittel zur steuerbaren Anpressdruckerzeugung des Stichelwerkzeuges auf. Erfindungsgemäß ist das Mittel zur steuerbaren Anpressdruckerzeugung gebildet aus einem linearen magnetischen Aktuator. Ein linearer magnetischer Aktuator erlaubt eine Einstellung des Anpressdrucks während des Ritzvorgangs. Dadurch wir ermöglicht optische Gitter mit variierenden Furchentiefen von Furch zu Furche und innerhalb einzelner Furchen herzustellen.

## Beschreibung

### Technisches Gebiet

Die vorliegende Erfindung betrifft eine Vorrichtung der dem Oberbegriff des Anspruchs 1 entsprechenden Art zur Herstellung optischer Gitter, ein Verfahren der dem Oberbegriff des Anspruchs 4 entsprechenden Art zur Herstellung optischer Gitter und ein optisches Gitter. Die Vorrichtung dient dem Ritzen von Linien in Oberflächen mittels eines Stichelwerkzeugs. Vorrichtungen hierzu werden auch als Gitterteilmaschinen bezeichnet. Die optischen Gitter werden vielfältig in der Röntgentechnik und für Messungen in der Astrophysik als auch allgemein in der Optik eingesetzt.

### Stand der Technik

Eine Gitterteilmaschine besteht im Wesentlichen aus folgenden Teilen: Halterung mit Fixierung für die Rohlinge; motorisierter Vorschub mindestens in eine Richtung für die Halterung des Rohlings; Stichelwerkzeug mit DiamantSpitze zum Ritzen der Linien und Halterung für das Stichelwerkzeug mit motorisiertem Vorschub in mindestens eine Richtung, transversal zu der der Halterung des Rohlings, Mittel zum Anheben und Mittel zur Erzeugung eines Anpressdrucks des Stichelwerkzeugs auf die Oberfläche des Rohlings. Die Erzeugung des Vorschubs und das Heben und Senken des Stichelwerkzeugs erfolgen elektronisch gesteuert. Gitterteilmaschinen sind zumeist mit Interferometern zur Bestimmung des Vorschubs einer Halterung ausgerüstet.

Die Halterung für den Rohling ist so ausgelegt, dass der Rohling beim Verschieben und gleichzeitigen Ritzen mit einem Stichelwerkzeug gegenüber der entstehenden Reibung fixiert ist. Er kann somit nicht aus der auf die Oberfläche des Rohlings bezogenen relativen Verschiebung zum Stichelwerkzeug ausscheren.

Ein Rohling ist meist ein Substrat aus Glas oder Silizium mit ebener polierter Oberfläche geringer Oberflächenrauigkeit, der mit einer dünnen metallischen Schicht, z.B. aus Gold, bedeckt ist. Es kann sich aber auch um einen Metallkörper handeln. Neben den ebenen Oberflächen können auch konkav oder konvex gekrümmte Oberflächen bearbeitet werden.

Die Halterung für den Rohling lässt sich mit motorisierten Vorschüben in mindestens eine Richtung verschieben. Hierfür kommen z.B. alle gängigen Linearmotoren oder Hydraulikvorschübe in Frage. Vorteilhaft sind dabei Motoren oder Vorschübe, die eine konstante Geschwindigkeit bei der Bewegung der Halterung garantieren. Mindestens ein Vorschub erzeugt eine Verschiebung in eine Richtung. Bei einem planaren Rohling liegt die Verschiebungsrichtung in einer Ebene parallel zur der Oberfläche des Rohlings, die bearbeitet wird. Die mindestens eine Verschiebungsrichtung entspricht dabei entweder der Richtung der linienartigen Strukturen eines optischen Gitters oder dem Versatz dieser Strukturen zueinander, d.h. der Gitterkonstanten.

Die Gitterkonstante bestimmt hauptsächlich die Eigenschaft des Gitters bezüglich der Beugung (Ablenkungswinkel) bei einer gegebenen Wellenlänge. Ein weiterer wichtiger Parameter für die Optimierung der Beugungseffizienz eines Gitters bei einem bestimmten Energie-/Wellenlängenbereich ist der Blazewinkel. Aus dem gewählten Blazewinkel und der Gitterkonstanten ergibt sich eine optimale Furchentiefe. Die Furchentiefe ist über den Anpressdruck des Stichelwerkzeugs steuerbar.

Das Stichelwerkzeug besteht aus einer Spitze (Schneide), dem eigentlichen Mittel zum Ritzen einer Oberfläche, und einer Halterung für diese Spitze. Die Spitze ist zumeist aus Diamant gefertigt. Anstelle einer Diamantspitze kann eine Spitze aus einem vergleichbar harten Material (z.B. SiC, Moissanit) eingesetzt werden. Ein Teil der Halterung des Stichelwerkzeugs ist geführt (z.B. mit einer Schiene) mit motorisierten Vorschüben in mindestens eine Richtung verschiebbar. Hierfür kommen z.B. alle gängigen Linearmotoren oder Hydraulikvorschübe in Frage. Vorteilhaft sind auch hier Motoren oder Vorschübe, die eine konstante Geschwindigkeit bei der Bewegung der Halterung garantieren. Der mindestens eine Vorschub erzeugt eine Verschiebung in eine Richtung, die transversal zur Verschiebungsrichtung der Halterung für den Rohling ist. Bei einem planaren Rohling liegt diese Verschiebungsrichtung ebenfalls in einer Ebene parallel zu der Oberfläche des Rohlings, die bearbeitet wird. Die mindestens eine Verschiebungsrichtung der Halterung für das Stichelwerkzeug entspricht dabei meistens der Richtung der linienartigen Strukturen eines optischen Gitters.

Eine Kombination der mindestens zwei Verschiebungsrichtungen in einer Halterung, die des Rohlings oder die des Stichelwerkzeugs, ist möglich.

In der Halterung für das Stichelwerkzeug ist ein Mittel integriert, welches ermöglicht das Stichelwerkzeug auf die Oberfläche eines Rohlings abzusenken oder von dieser wieder anzuheben. Nur so ist die Fertigung separater Linien zu verwirklichen.

Die Verschiebungen werden mit dem Anheben oder Absenken des Stichelwerkzeugs so kombiniert, dass separate Linien entstehen.

Bei konkaven oder konvexen Oberflächen bleiben die Vorschübe der Halterungen unverändert. Die Anpassung an die Höhenunterschiede auf der Oberfläche des Rohlings erfolgt über eine in lediglich senkrechter Richtung zu den Vorschüben der Halterungen bewegliche Befestigung des Stichelwerkzeugs an einer Führung.

Der Diamantspitze des Stichelwerkzeugs kommt eine besondere Bedeutung zu, da die Form und Justierung der Spitze das Profil der in die Oberfläche geritzten Rillen bestimmt. Beim Ritzen mit dem Stichelwerkzeug unterliegen die metallischen Schichten eines Rohlings einem Umformprozess. Es handelt sich um eine sogenannte mechanische Teilung, woraus sich die Bezeichnung Gitterteilmaschine ableitet. Für den Umformprozess der metallischen Schicht ist es wichtig, einen definierten Anpressdruck auf das Stichelwerkzeug auszuüben, der an die zu verdrängende Menge an Metall, d.h. die Furchentiefe, durch Versuche angepasst wird. Kriterium für diese Versuche ist die Kontrolle der Furchenform.

Mittels Gitterteilmaschinen werden überwiegend sogenannte Sägezahn- oder Blazegitter gefertigt. Dies sind Gitter mit einem Profil, das einem Sägezahn gleicht. Die dem langen Schenkel des Sägezahns entsprechenden Flächen werden als Blazeflächen (engl. to blaze = funkeln) bezeichnet und sind an der konstruktiven Interferenz beteiligt. Der Winkel zwischen Blazefläche und Oberfläche des Rohlings (der Blazewinkel) kann so optimiert werden, dass möglichst viel Licht einer bestimmten Wellenlänge in eine bestimmte Beugungsordnung fällt.

Bei der mechanischen Teilung können Blazewinkel in einem weiten Bereich erzielt werden. Eine Umformung der metallischen Schicht zu einem sauberen Sägezahnprofil entsteht bei korrekter Justierung der Winkellagen des Stichelwerkzeugs in Bezug auf die Oberfläche des Rohlings, einem geeigneten Diamantschliff und dem korrekten Anpressdruck. Diese Parameter werden gegebenenfalls durch Versuche ermittelt.

Die Halterung für das Stichelwerkzeug muss gewährleisten, dass dieses ausreichend fixiert ist, um eine Positionstreue (bezüglich ihrer Position in ihrer Halterung) während des Ritzvorgangs zu gewährleisten. Die Halterung, inklusive möglicher zusätzlicher Vorrichtungen, ermöglicht zudem das Stichelwerkzeug kontrolliert zu heben und auf die Oberfläche zu senken. Über die Halterung wird zudem der Anpressdruck vermittelt.

In der US 2013/0335825 A1**,** die den nächsten Stand der Technik bildet, ist eine Gitterteilmaschine offenbart, bei der der Anpressdruck des Stichelwerkzeugs über ein piezoelektrisches Element erzeugt und gesteuert wird. Dieses piezoelektrische Element entspricht in seinem Aufbau und der Funktionsweise einem Rasterkraftmikroskop. Bei dieser Vorrichtung zur Erzeugung des Anpressdrucks kann es zu einer elektrostatischen Aufladung der Probe und des Steuergeräts kommen (im Modus tunnelnder Elektronen) oder es ist eine zusätzliche optische Einheit zur Bestimmung des Anpressdrucks notwendig. Zudem ist der Aufbau eines Rasterkraftmikroskops aufwendig.

Der Anpressdruck des Stichelwerkzeuges kann auch durch die Auflage von Gewichten erfolgen, wie es in der US 1,331,966 aufgezeigt ist. Dies ermöglicht aber keinen während des Ritzprozesses anpassbaren oder steuerbaren Anpressdruck, wodurch diese Methode in ihrer Anwendung limitiert ist.

Die US 2013/0335825 A1 bildet auch den nächsten Stand der Technik für ein Verfahren zum Ritzen von Gittern. Das beschriebene Verfahren besteht aus den Schritten: a) Befestigen eines Rohlings auf einer Halterung; b) Anpressen eines Stichelwerkzeuges auf die Oberfläche des Rohlings; c) Verschieben der Halterung in eine erste Richtung, während das Stichelwerkzeug auf die Oberfläche des Rohlings gepresst ist; d) Beenden des Verschiebens der Halterung des Rohlings nach einer Strecke, die einer Linie eines herzustellenden optischen Gitters genügt; e) Anheben des Stichelwerkzeugs; f) Verschieben des Rohlings oder des Stichelwerkzeugs in eine zweite Richtung senkrecht zur ersten, wobei die Strecke des Verschiebens einem Gitterabstand eines herzustellenden optischen Gitters genügt; g) Wiederholen der Schritte b) bis f) bis zu einer Anzahl Linien, die einem herzustellenden optischen Gitter genügt.

Mit dem in der US 2013/0335825 A1 vorgestellten Verfahren können einfache (d.h. eine konstante Gitterkonstante aufweisende) optische Gitter und VLS-Gitter hergestellt werden, wie sie dort offenbart sind und den nächsten Stand der Technik für das optische Gitter bilden.

### Aufgabenstellung

Die Aufgabe der vorliegenden Erfindung ist es eine Vorrichtung zur Herstellung optischer Gitter anzugeben, mit der der Anpressdrucks eines Stichelwerkzeuges in einer Gitterteilmaschine variierbar während des Ritzvorganges geregelt werden kann und die von einfachem Aufbau ist. Weiterhin ist es die Aufgabe der vorliegenden Erfindung ein Verfahren zur Herstellung optischer Gitter anzugeben, mit dem eine größere Flexibilität erreicht werden kann und ein mit diesem Verfahren hergestelltes optische Gitter.

Die Aufgabe wird durch die Merkmale der Ansprüche 1, 4 und 5 gelöst.

In der erfindungsgemäßen Lösung für eine Vorrichtung zur Herstellung optischer Gitter wird der Anpressdruck mindestens teilweise, neben z.B. der Druckerzeugung durch Auflage von Gewichten, mit einem linearen magnetischen Aktuator erzeugt und ist über einen Stromfluss im Aktuator steuerbar.

In Ausführungsformen wird als linearer magnetischer Aktuator z.B. ein Tauchspulenaktuator (engl. voice coil actuator) oder ein Hubmagnet verwendet.

Ein Tauchspulenaktuator besteht aus einer stromdurchflossenen Luftspule und einem Magneten, der mit nur geringem Spiel in die Spule passt. Der Magnet ist insbesondere ein Permanentmagnet, Elektromagneten sind jedoch ebenfalls einsetzbar. Luftspule und Magnet sind relativ zueinander bewegbar. Nach dem elektroinduktiven Prinzip entstehen bei stromdurchflossener Spule Kräfte, die eine abstoßende Wirkung der beiden Teile erzeugen oder eine anziehende Wirkung haben. Die abstoßende Wirkung wird zur Erzeugung des Drucks auf die Spitze des Stichelwerkzeuges im auf die Oberfläche gesenkten Zustand genutzt und erzeugt mithin mindestens teilweise den Anpressdruck. Dieser ist über die Regulierung des Stromflusses in der Luftspule steuerbar.

Vorteilhaft bei dem Einsatz von Tauchspulenaktuatoren sind die sehr flachen Kraftlinien im Kraft-Weg-Diagramm. Diese garantieren, dass bei einer geringen Verschiebung der relativen Lage des Magneten und der Spule zueinander, die z.B. durch Unebenheiten auf der Oberfläche des Rohlings hervorgerufen werden können, nur sehr geringe Änderungen in der durch den Tauchspulenaktuator auf die Spitze des Stichelwerkzeuges wirkenden Kraft erfolgen. Der Anpressdruck kann so weitestgehend konstant gehalten werden.

Bei der Stromquelle für die Spule handelt es sich in vorteilhafter Weise um eine programmierbare Konstantstromquelle.

Bei der Kalkulation des Anpressdrucks ist das Gewicht des Stichelwerkzeuges mit zu berücksichtigen. Das Gewicht des Stichelwerkzeuges kann aber auch in vorteilhafter Weise, z.B. über einen Hebelarm mit justierbaren Gewichten, austariert werden. Die Halterung für das Stichelwerkzeug kann darüber hinaus so ausgelegt sein, dass zum erzeugbaren Anpressdruck über den Tauchspulenaktuator und gegebenenfalls dem Eigenwicht noch konstante Gewichte zur Erhöhung des Drucks an dieser angebracht werden können.

Die Kraft F des Tauchspulenaktuators ist proportional zur Länge L des stromdurchflossenen Leiters mit F = B·I·L (B: Stärke des Magnetfeldes, I: Stromstärke).

Mit dem Tauchspulenaktuator ist auch ein Abheben der Spitze des Stichelwerkzeuges von der Oberfläche des Rohlings realisierbar. Eine zusätzliche Vorrichtung zum Anheben und Absenken des Stichelwerkzeuges kann somit eingespart werden.

Anstelle eines Tauchspulenaktuators kann der lineare magnetische Aktuator auch durch einen Hubmagneten realisiert werden. Der Hubmagnet unterscheidet sich infolge seines Aufbaus und physikalischen Wirkprinzips vom Tauchspulenaktuator dadurch, dass die Kraftlinien im Kraft-Weg-Diagramm im Gegensatz zu denen des Tauchspulenaktuators steiler sind, was in einigen Anwendungen von Vorteil sein kann.

Die Befestigung des Stichelwerkzeuges an der Halterung ist in vorteilhafterweise in drei Rotationsfreiheitsgraden justierbar. Hilfreich für Justier- und Einrichtzwecke ist die Verwendung eines hochauflösenden kapazitiven Messsystems, welches die Höhe der Spitze des Stichelwerkzeuges (senkrecht zur Oberfläche des Rohlings) anzeigt.

Die Anpressdruckerzeugung ist unabhängig vom Vorschub bzw. der Lage des Rohlings variierbar. Der Druck ist über die Induktionswirkung sehr präzise einstellbar. Über eine Rückkopplung ist ein Druckausgleich bei unebener Oberfläche oder Materialfehlern realisierbar.

Der Aufbau ist dem verwendeten Mittel entsprechend einfach und eignet sich auch zum Nachrüsten an bereits bestehenden Gitterteilmaschinen.

Mithilfe des unabhängig vom Vorschub variierbaren Anpressdrucks lassen sich optische Gitter mit unterschiedlichen Furchentiefen, angepasst an eine variable Gitterkonstante (sogenannte VLS-Gitter von engl. variable line space grating) oder Mehrfach-Gitter, ohne Unterbrechung des Ritzvorganges herstellen. Die Mehrfach-Gitter zeichnen sich dabei durch Gitterlinien aus, die abschnittsweise unterschiedliche Furchentiefen aufweisen. Die Beugungsebenen der so gefertigten Teilgitter eines Mehrfach-Gitters sind zueinander parallel. Sie müssen während der Herstellung und auch bei der Benutzung des Gitters nicht separat justiert werden. Zudem kommt es zu einer erheblichen Zeitersparnis gegenüber einer Fertigung ohne die Möglichkeit den Anpressdruck während der Herstellung zu variieren. Die Herstellung von mehreren Gittern auf einer Oberfläche, wobei die einzelnen Gitter separiert voneinander vorliegen, ohne durchgehende Gitterlinien, die abschnittsweise zu verschiedenen Teilgittern gehören, ist ebenfalls mit Zeitersparnis durchzuführen. Weiterhin gilt auch für diese Gitter, dass die Beugungsebenen der verschiedenen Gitter auf einer Oberfläche, die in einem Herstellungsschritt gefertigt wurden, zueinander parallel sind.

Eine Gitterteilmaschine mit erfindungsgemäßer Regelung des Anpressdrucks ist auch geeignet gekrümmte Gitterlinien auf einem planen Rohling herzustellen oder gekrümmte (konkav oder konvex) Oberflächen von Rohlingen zu bearbeiten, wobei auch die gekrümmten Gitterlinien (eines planen Rohlings) auf gekrümmten Oberflächen erzeugbar sind.

Die sehr genau und fein abstimmbare Einstellung des Anpressdrucks ermöglicht eine Fertigung von optischen Gittern mit erhöhter Präzision im Vergleich zu dem Stand der Technik nach bekannten Methoden.

In der erfindungsgemäßen Lösung für ein Verfahren zur Herstellung optischer Gitter wird der Anpressdruck während des Ritzens einer Linie variiert oder konstant gehalten oder bzw. und von Linie zu Linie variiert.

Dabei wird ein am Anfang einer Linie durch ein herzustellendes optisches Gitter bestimmter Anpressdruck eingestellt. Dieser Anpressdruck wird ab dem Absenken der Spitze des Stichelwerkzeugs auf die Oberfläche des Rohlings wirksam, wobei ab dem Ort des Absenkens das Ritzen einer Linie mit durch den Anpressdruck bestimmter Furchentiefe beginnt. Der Rohling ist zuvor auf einer Halterung befestigt worden.

Das Ritzen einer Linie erfolgt durch eine Verschiebung der Halterung des Rohlings oder der Halterung des Stichelwerkzeugs in eine erste Richtung während die Spitze des Stichelwerkzeugs auf die Oberfläche des Rohlings gepresst ist.

Während des Ritzens wird schrittweise der Anpressdruck variiert oder konstant gehalten. Dabei werden Teilstücke der Gitterlinien, die bei gleichem Anpressdruck geritzt sind, d.h. gleiche Furchentiefe aufweisen, in ihrer Position aufeinander abgestimmt. Die Abstimmung erfolgt so, dass die Teilstücke gleicher Furchentiefe senkrecht zu den Gitterlinien ein Gitter ergeben, wobei die Furchentiefe auf die Gitterkonstante dieses Gitters abgestimmt ist.

Demzufolge weist z.B. ein optisches Gitter mit zwei Gitterabständen Linien mit zwei Furchentiefen auf, wobei eine Furchentiefe auf ein Gitter mit einer ersten, kleinsten Gitterkonstanten abgestimmt ist und die andere auf ein Gitter mit der doppelten Gitterkonstanten und Linien mit nur einer Furchentiefe, die an die erste, kleinste Gitterkonstanten angepasst ist. Die letzteren Gitterlinien sind dabei gerade nur so lang, wie das Teilstück gleicher Furchentiefe der Linien mit zwei Furchentiefen. Beide Linien wechseln einander ab im Abstand der ersten, kleinsten Gitterkonstanten. Die Lage von Linien oder Linienteilstücken gleicher Furchentiefe sind in ihrer Position aufeinander abgestimmt. Senkrecht zu den Linien entstehen so zwei optische Gitter unterschiedlicher Gitterkonstanten und Furchentiefen. Die einzelnen Gitterlinien dieser Teilgitter in einem Mehrfach-Gitter können dabei ohne Absetzen geritzt werden. Eine Anpassung des Drucks von Linie zu Linie ist ebenfalls ohne Unterbrechung des Vorgangs möglich.

Nach dem Ritzen einer Gitterlinie wird das Stichelwerkzeug angehoben und die Halterung des Rohlings oder die des Stichelwerkzeuges um einen Betrag, der der kleinsten Gitterkonstanten des Gitters entspricht, senkrecht zu den Gitterlinien verschoben. Zumeist wird die Halterung des Rohlings zur Erzeugung dieses Versatzes verschoben. Möglich ist aber auch die Verschiebung der Halterung des Stichelwerkzeuges.

Im Falle einer gekrümmten Gitterlinie auf einem planen Rohling ist eine gleichzeitige abgestimmte Verschiebung in den zwei Vorschubrichtungen während des Ritzens (Relativbewegungen zwischen Rohling und Stichel) nötig oder der Stichel wird auf einer gekrümmten Bahn geführt. Im Falle einer konkaven oder konvexen Oberfläche des Rohlings folgt das Stichelwerkzeug beim Ritzen den Änderungen in der Höhe.

Ein optisches Gitter, das dem vorstehenden Verfahren gemäß gefertigt ist, entspricht einem erfindungsgemäßen Mehrfach-Gitter. Es ist gebildet aus mehreren Teilgittern, die unterschiedliche Gitterkonstanten und Furchentiefen aufweisen, wobei, dem herzustellenden optischen Mehrfach-Gitter gemäß, bestimmte Gitterlinien Teilstücke unterschiedlicher Furchentiefen aufweisen, die zu unterschiedlichen Teilgittern gehören.

Die optischen Gitter, die dem vorstehenden Verfahren gemäß gefertigt sind, können dabei auch konkav oder konvex gekrümmte Oberflächen oder gekrümmte Linien aufweisen, wobei eine Kombination der Krümmung der Oberfläche und der Gitterlinien, verursacht durch eine abgestimmte Verschiebung in den zwei Vorschubrichtungen während des Ritzens, realisierbar ist, wie es Ausführungsformen entspricht.

Eine Zeitersparnis bei der Herstellung von mehreren Gittern auf einer Oberfläche eines Rohlings ergibt sich insbesondere dann, wenn die Gitterkonstanten der Gitter ganzzahlige Vielfache voneinander sind. Die Gitterlinien der Mehrfach-Gitter sind alle parallel, so dass eine Justierung der Beugungsebene bei einem Wechsel von einem optischen Gitter auf das andere nicht nötig ist.

Eine Variation der Furchentiefe durch Änderung des Anpressdrucks von Linie zu Linie zur Anpassung dieser an unterschiedliche Gitterkonstanten in einem VLS-Gitter ist mit dem erfindungsgemäßen Verfahren ebenfalls möglich.

### Ausführungsbeispiele

Die Erfindung soll in Ausführungsbeispielen und anhand von 4 Figuren näher erläutert werden.

Die Figuren zeigen:
- Figur 1:: Ausschnitt eines Querschnitts durch eine Gitterteilmaschine mit Tauchspulenaktuator im Ruhezustand.
- Figur 2:: Ausschnitt eines Querschnitts durch eine Gitterteilmaschine mit Tauchspulenaktuator im aktivierten Zustand.
- Figur 3:: Skizze einer Aufsicht auf Ausschnitte optischer Gitter mit zwei unterschiedlichen Anordnungen von Gitterlinien.
- Figur 4:: Skizze einer Aufsicht (Ausschnitt) auf ein optisches Gitter mit zwei unterschiedlichen Gitterkonstanten.

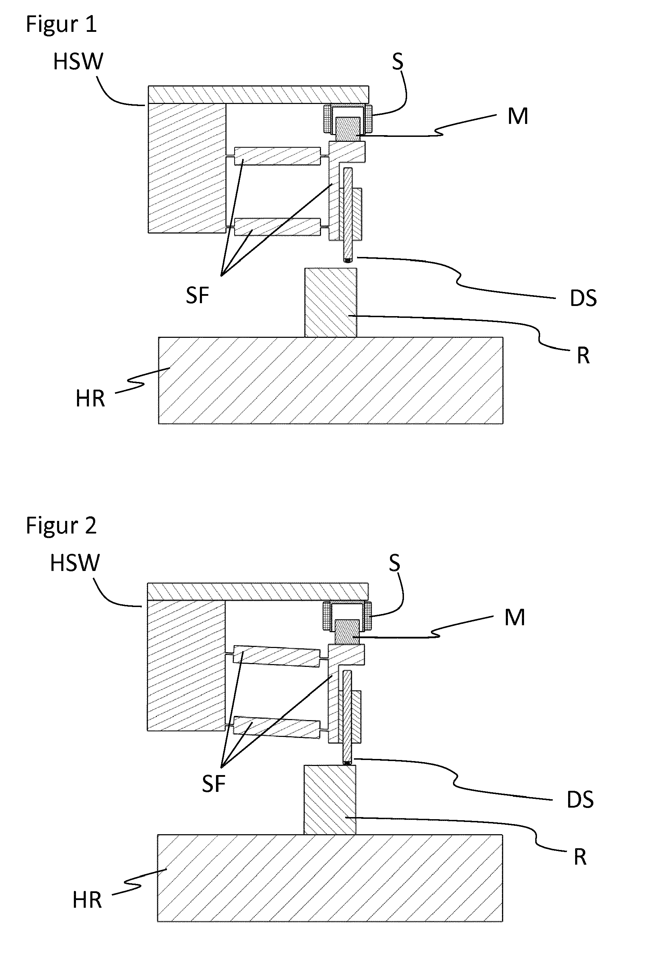

Die Figur 1 zeigt einen Ausschnitt aus einem Querschnitt einer Gitterteilmaschine mit Tauchspulenaktuator entsprechend eines Ausführungsbeispiels. Der Tauchspulenaktuator besteht aus einem Magneten **M** und einer Luftspule **S.** Die Luftspule **S** ist an einem starren Teil der Halterung des Stichelwerkzeuges **HSW** befestigt (verschraubt), der beim Vorschub mitbewegt wird. Der Magnet **M** ist auf einer vertikalen Führung des Stichelwerkzeuges **HSW,** einer Parallelfederführung **SF,** befestigt (geklebt). Die Parallelfederführung **SF** wird bei Aktivierung der Spule **S,** durch die bei geeignetem Stromfluss abstoßend wirkenden Kräfte auf den Magneten **M,** nach unten bewegt. Somit wird die Diamantspitze **DS** des Stichelwerkzeuges **HSW** auf die Oberfläche des Rohlings **R,** hier ein Substrat mit Goldschicht, gedrückt, wie es in der Figur 2 gezeigt ist. Der Rohling **R** ist in einer Halterung **HR** fixiert, deren Verschieberichtung senkrecht zur Zeichenebene liegt. Der verschiebbare Teil der Halterung des Stichelwerkzeuges **HSW** liegt in der Zeichenebene parallel zur Oberfläche des Rohlings **R.**

Die Parallelfederführung **SF** ist so ausgelegt, dass ein zusätzliches Gewicht zur Erhöhung des Anpressdrucks aufgelegt werden kann. Das Gewicht des Stichelwerkzeuges ist austariert. Das Mittel zur Anhebung und Absenkung des Stichelwerkzeuges besteht aus einem pneumatisch betrieben Zug. Diese Details sind aus Gründen der Übersichtlichkeit nicht gezeigt.

Im Ausführungsbeispiel ist eine Luftspule mit einem Widerstand von 2,8 Ohm und einer Induktivität von 0,2 mH mit einem Rundmagneten aus einer Neodym-Eisen-Borverbindung (NdFeB) und einem Außendurchmesser von 10 mm und einer Höhe von 10 mm kombiniert.

Die verwendete Konstantstromquelle in Kombination mit dem adaptierten Tauchspulenaktuator liefert bei einem Spulenstrom von +/-105 mA eine Kraftänderung zwischen der Spitze des Stichelwerkzeugs und der Substratoberfläche von +/- 0,05 N. Die Konstantstromquelle kann programmiert betrieben werden.

Bei gegebener Diamantgeometrie sind z.B. mit dieser Konfiguration Blazeprofile mit einem Blazewinkel von 5 Grad und Liniendichten von 600 L/mm (Linien pro mm) bis 1200 L/mm herstellbar. Höhere Liniendichten sind durch weiteres Verringern des Anpressdrucks (durch Verringern der wirkenden Kraft im Tauchspulenaktuator) herstellbar. Der Anpressdruck ist im Ausführungsbeispiel entsprechend der untenstehenden Tabelle 1, die den Zusammenhang zwischen Liniendichte, Anpresskraft und Spulenstrom bei einem zusätzlich aufgelegten Gewicht von 5 g (entspricht ca. 0,05 N Anpressdruck) auf die Parallelfederführung wiedergibt, anpassbar. Die Anpresskraft ist direkt proportional zum Anpressdruck über die Beziehung *p* = *F*/*A* (p: Druck, F: Kraft, A: Fläche). Ein negativer Spulenstrom reduziert hier den Anpressdruck, der durch die Auflage des Gewichts erzeugt wird. Die Furchentiefen variieren dabei zwischen ∼ 70 nm und 150 nm auf einem mit Gold bedampften Substrat. Die optimale Furchentiefe t des Sägezahnprofiles ist annähernd bestimmt über den Zusammenhang zwischen Furchenabstand a und Blazewinkel b mit t = a · tan(b) (z.B. 600 L/mm -> a = 1666,7 nm, tan(5°) · 1666,7 nm = 145,8 nm). Eine Auflösung der Anpresskraft von 0,001 N ist mit dem Tauchspulenaktuator des Ausführungsbeispiels realisierbar.

**Tabelle 1**

| Furchendichte [L/mm] | Anpresskraft [N] | Spulenstrom [mA] |
|---|---|---|
| 600 | 0.090 | 100 |
| 750 | 0.058 | 33.5 |
| 900 | 0.040 | -3.8 |
| 1050 | 0.030 | -24.6 |
| 1200 | 0.025 | -35.0 |

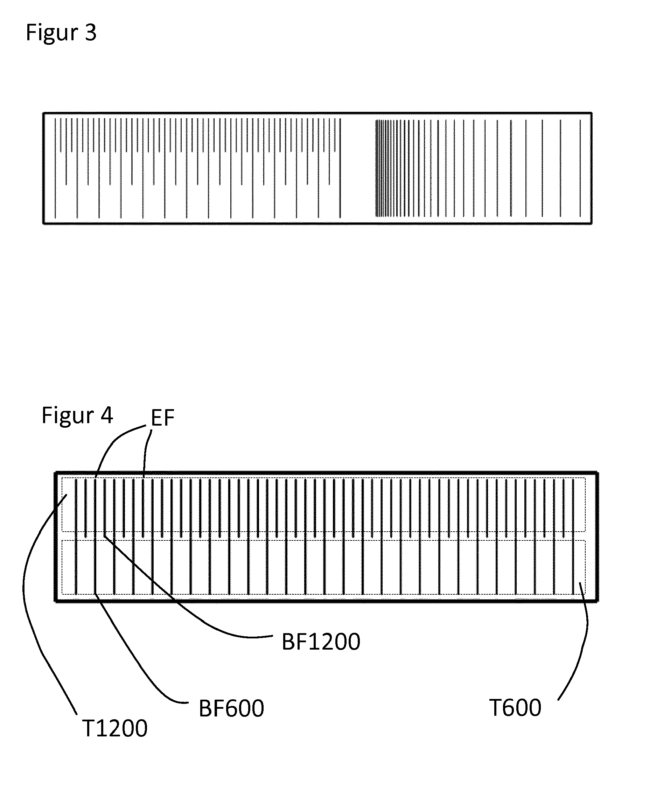

In der Figur 3 ist eine Skizze einer Aufsicht auf ein optisches Gitter mit zwei unterschiedlichen Anordnungen von Gitterlinien gezeigt, mit aus Gründen der Übersichtlichkeit reduzierter Anzahl Linien. Auf der linken Seite befindet sich ein Mehrfach-Gitter mit drei verschiedenen Liniendichten bzw. Gitterkonstanten und Furchentiefen. Auf der rechten Seite befindet sich ein sogenanntes VLS-Gitter.

Für die Fertigung eines VLS-Gitters wird in Abhängigkeit von der aktuellen Gitterkonstante, die durch die Maschinensteuerung zu jeder Zeit bekannt ist, der entsprechende Strom durch die programmierte Konstantstromquelle in der Spule freigegeben bevor die Spitze des Stichelwerkzeugs auf die Oberfläche des Rohlings gesenkt und anschließend konstant gehalten wird, so dass Gitterlinien mit an die aktuelle Gitterkonstante angepasster Furchentiefe erzeugt werden.

Im Folgenden werden die einzelnen Schritte zur Erzeugung eines Mehrfach-Gitters, wie es als Skizze und auf eine, aus Gründen der Übersichtlichkeit, reduzierte Anzahl Linien in der Figur 4 gezeigt ist, bestehend aus einem 600 L/mm-Teilgitter **T600** und einem 1200 L/mm-Teilgitter **T1200,** auf einem mit Gold bedampften Substrat angegeben. Die Bereiche der Teilgitter sind mit gestrichelten Linien angedeutet. Die Linien des 600 L/mm-Gitters gehören dabei zumindest abschnittweise zu beiden Teilgittern. Das optische Gitter, das hierbei entsteht, entspricht einem Mehrfach-Gitter aus zwei Teilgittern. Die längsten Gitterlinien des Gitters sind 20 mm lang und weisen zwei gleich lange (10 mm) Teilstücke auf. Die Furchentiefen betragen im Mittel 140 Nanometer für das 600 L/mm Gitter (Gitterkonstante = 1,667 µm) und 70 Nanometer für das 1200 L/mm Gitter (Gitterkonstante = 0,833 µm). Die Abweichungen von den optimalen Werten (145,8 nm Furchentiefe für das 600 L/mm Gitter und 72,6 nm für das 1200 L/mm Gitter) sind durch die Fertigung bedingt. Das gesamte Mehrfach-Gitter umfasst, im Ausführungsbeispiel, einen Bereich von ∼ 20 mm x 20 mm. Verfahrensschritte zum Erzeugen eines Mehrfachgitters:
1) Spulenstrom auf 100 mA setzen.
2) Spitze des Stichelwerkzeuges auf Höhe des Beginns einer Furche **BF600** die zum 600 L/mm Gitter gehört auf die Oberfläche des Rohlings absenken.
3) Ritzen der Hälfte der Furche durch Verschieben der Halterung des Stichelwerkzeugs und dann einstellen des Spulenstroms auf -35 mA.
4) Bei Erreichen des Endes der Furche **EF** Stichelwerkzeug anheben.
5) Spulenstrom bei -35 mA belassen für Erzeugung der nächsten Furche.
6) Rohling um Gitterabstand des 1200 L/mm Gitters transversal zu den Furchen verschieben.
7) Spitze des Stichelwerkzeuges auf Höhe des Beginns einer Furche **BF1200,** die nur zum 1200 L/mm Gitter gehört, auf die Oberfläche des Rohlings absenken.
8) Ritzen der Linie bis zum Ende der Furche **EF** und dort anheben des Stichelwerkzeugs.
9) Rohling um Gitterabstand des 1200 L/mm Gitters transversal zu den Furchen verschieben.
10)Wiederholung der Punkte 1 bis 9.

## Patentansprüche

1. Vorrichtung zur Herstellung optischer Gitter mindestens aufweisend eine Halterung für einen Rohling, ein Stichelwerkzeug mit Halterung, motorisierte Vorschübe für die Halterungen in mindestens zwei Richtungen, Mittel zum steuerbaren Anheben und Absenken des Stichelwerkzeugs und Mittel zur steuerbaren Anpressdruckerzeugung des Stichelwerkzeuges,
**dadurch gekennzeichnet, dass**
das Mittel zur steuerbaren Anpressdruckerzeugung des Stichelwerkzeuges (HSW) aus einem linearen magnetischen Aktuator gebildet ist.

2. Vorrichtung zur Herstellung optischer Gitter nach Anspruch 1,
**dadurch gekennzeichnet, dass**
der lineare magnetische Aktuator ein Tauchspulenaktuator ist.

3. Vorrichtung zur Herstellung optischer Gitter nach Anspruch 1,
**dadurch gekennzeichnet, dass**
der lineare magnetische Aktuator ein Hubmagnet ist.

4. Verfahren zur Herstellung optischer Gitter mindestens aufweisend die Schritte a) Befestigen eines Rohlings auf einer Halterung; b) Anpressen eines Stichelwerkzeuges auf die Oberfläche des Rohlings; c) Verschieben des Rohlings oder des Stichelwerkzeugs in einer ersten Richtung, während das Stichelwerkzeug auf die Oberfläche des Rohlings gedrückt ist; d) Beenden der Lageänderung nach einer Strecke, die einer Linie eines herzustellenden optischen Gitters genügt; e) Anheben des Stichelwerkzeugs; f) Verschieben des Rohlings oder des Stichelwerkzeugs in eine zweite Richtung senkrecht zur ersten, wobei die Strecke des Verschiebens einem Gitterabstand eines herzustellenden optischen Gitters genügt; g) Wiederholen der Schritte b) bis f) bis zu einer Anzahl Linien, die einem herzustellenden optischen Gitter genügt,
**dadurch gekennzeichnet, dass**
der in Schritt b) eingestellte Anpressdruck dem zur Erzeugung einer Furchentiefe zu Beginn einer Gitterlinie eines herzustellenden optischen Gitters entspricht und der Anpressdruck in Schritt c) während des Verschiebens angepasst wird, wie es dem herzustellenden optischen Gitter entspricht.

5. Optisches Gitter hergestellt nach einem Verfahren gemäß Anspruch 4,
**dadurch gekennzeichnet, dass**
es aus mehreren Teilgittern mit unterschiedlichen Gitterkonstanten und Furchentiefen gebildet ist, wobei dem herzustellenden optischen Gitter gemäß bestimmte Gitterlinien Teilstücke unterschiedlicher Furchentiefen aufweisen, die zu unterschiedlichen Teilgittern gehören.

6. Optisches Gitter gemäß Anspruch 5,
**dadurch gekennzeichnet, dass**
die Oberfläche des Rohlings gekrümmt ist.

7. Optisches Gitter gemäß Anspruch 5 oder 6,
**dadurch gekennzeichnet, dass**
die Gitterlinien gekrümmt sind.
